# EUROPEAN PATENT APPLICATION

(11) **EP 4 461 459 A1**
(43) Date of publication of application: **13.11.2024**
(21) Application number: 23753064.7
(22) Date of filing: 02.02.2023
(51) Int. Cl.: B23Q 17/09, B23Q 17/12, B23Q 15/12

(54) **MACHINE TOOL CHATTERING CONTROL DEVICE AND CONTROL METHOD**

(30) Priority: 09.02.2022 KR 20220016731
(71) Applicant: DN Solutions Co., Ltd., Changwon-si, Gyeongsangnam-do 51537 (KR)
(72) Inventor: OH, Daesung, Changwon-si, Gyeongsangnam-do 51427 (KR)
(74) Representative: BCKIP Part mbB
(86) International application number: PCT/KR2023/001499
(87) International publication number: WO 2023/153713

(57) **Abstract**

An apparatus of controlling a chattering of a machine tool includes an acceleration sensor installed at a forced frequency part of the machine tool to detect a chattering signal of the machine tool; a monitor including a chattering output unit for displaying a chattering value in a graph form, a chattering correction direction display unit for outputting an increase or a decrease of a rotation amplitude and a rotation amplitude variable period, and a parameter input unit for inputting an increase or a decrease ratio of the rotation amplitude and a time corresponding to the rotation amplitude variable period; and a control unit for adjusting the rotation amplitude and the rotation amplitude variable period manually or automatically, which stabilizes the chattering of the machine tool and reduces a vibration and a noise caused by the chattering and prevents abnormal wear and damage to the machine tool.

## Description

### [Technical Field]

The present disclosure relates to a chattering control of a machine tool, and more specifically, to an apparatus and a method of detecting a chattering of a machine tool in real time and controlling a rotation amplitude and a rotation amplitude variable period of a spindle to reduce the chattering in response to chattering characteristics.

### [Background Art]

When a workpiece is processed using a cutting tool in a machine tool, vibration and noise, so called a chattering is generated in the machine tool. The chattering is generated by various factors such as design errors of the machine tool and disturbances or the like, which not only reduces durability of a machine tool structure, but also acts as a significant cause of deteriorating a degree of a machining precision of the workpiece.

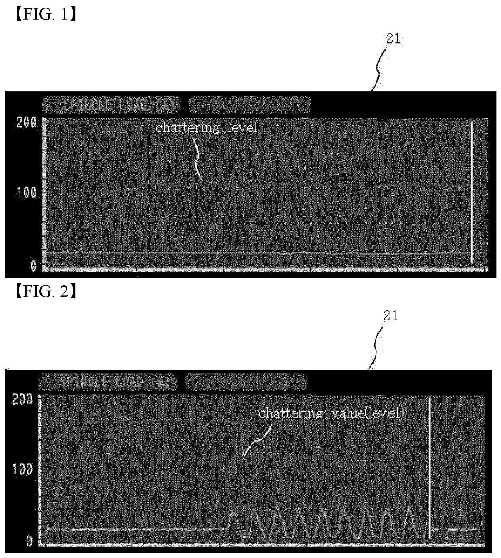

In general, such the chattering is identified by the noise generated during machining of the workpiece or a roughness of the machined surface of the workpiece visually checked by an operator after the machining. Alternatively, as shown in FIG. 1, the chattering is detected through a chattering monitoring device using a vibration sensor, etc. installed in the machine tool. When the chattering is detected as such, as shown in FIG. 2, the operator repeats an operation of empirically changing a rotation amplitude of a spindle or varying a rotation amplitude variable period according to a degree of the detected chattering to reduce the chattering.

However, since the operator finds a chattering stable region, depending on his/her senses and experiences, by repeatedly trying to change the rotation amplitude of the spindle and vary the rotation amplitude variable period, the chattering may not be stabilized or may take a long period of time to be stabilized depending on the operator's experiences and skill proficiencies. In addition, even an experienced operator may proceed machining of the workpiece for a certain period of time or complete the machining of the workpiece by changing the rotation amplitude of the spindle and by varying the rotation amplitude variable period, damage might be occurred to both the workpiece and the machine tool due to the chattering that has been already generated until a chattering stabilization is obtained. Further, operator's inconveniences accumulate as much as the time required to perform such the chattering stabilization. In addition, by adjusting the rotation amplitude and the rotation amplitude variable period of the spindle according to the operator's skill proficiencies or a subjective judgment of each operator, the chattering stabilization process for each and every workpiece may not be uniformly performed.

Patent Document 1, as a related art, discloses a method of reducing a vibration of a transport shaft that occurs during a rapid transportation, in which a machine tool has the transport shaft applied with a long shaft and a proximity sensor installed at one end of the transport shaft, and when a transport object enters a vibration generation region, a transporting speed of the transport shaft is reduced by detecting signals of the proximity sensor, thereby reducing the vibration of the transport shaft. However, this method suppresses the vibration by simply designating the vibration generation region and reducing a transporting speed of the transport object in the vibration generation region, which may not actively respond to a chattering of the machine tool and fail to reduce the chattering itself.

As another related art, Patent Document 2 discloses a method of suppressing vibration of a machine tool by measuring the vibration of the machine tool, generating a forced frequency through controlling of a forced frequency part based on a magnitude of the measured vibration, and changing a phase of the vibration waveform to suppress the vibration. However, this method requires a separate forced frequency part and causes other issues regarding where and how to install such the forced frequency part, resulting in making the machine tool's structure complicated and increasing manufacturing costs of the machine tool.

### [Cited References]

(Patent Document 1) Korean Patent Laid-Open Publication No. 10-2009-0060517
(Patent Document 1) Korean Patent Laid-Open Publication No. 10-2014-0043973

### [Disclosure of Invention]

### [Technical Problem]

To resolve the problems discussed above, an object of the present disclosure is to provide an apparatus and a method of controlling a chattering of a machine tool which is capable of automatically or manually adjusting a rotation amplitude and a rotation amplitude variable period of a spindle with ease based on a detected chattering that is generated in the machine tool.

### [Technical Solution]

To achieve the objects discussed above, an apparatus of controlling a chattering of a machine tool according to an exemplary embodiment of the present disclosure may include: an acceleration sensor installed at a forced frequency part of the machine tool to detect a chattering signal of the machine tool; a monitor including a chattering output unit for displaying a chattering value provided from the acceleration sensor in a graph form, a chattering correction direction display unit for outputting an increase or a decrease of a rotation amplitude and a rotation amplitude variable period of a spindle, and a parameter input unit for inputting an increase or a decrease ratio of the rotation amplitude of the spindle and a time corresponding to the rotation amplitude variable period; and a control unit for changing the rotation amplitude and the rotation amplitude variable period of the spindle by providing a rotation amplitude ratio and an amplitude variable period value of the spindle, which are input through the parameter input unit, to a numerical control device when a chattering value is greater than a predetermined minimum chattering value or a chattering amplitude is greater than a predetermined reference amplitude.

In a preferred embodiment, the control unit may be configured to set a minimum chattering value to a chattering value that determines a chattering of the machine tool to be stable for a predetermined time and set a predetermined reference amplitude to a standard deviation of the chattering amplitude that determines the chattering to be stable for a predetermined time period, and wherein when the chattering value of the machine tool provided from the acceleration sensor is greater than the minimum chattering value, or the standard deviation of the chattering amplitude of the machine tool provided from the acceleration sensor within a predetermined time period is greater than the predetermined reference amplitude, the control unit may be configured to determine that a chattering correction is necessary.

In a preferred embodiment, the control unit may be configured to output a signal for displaying an upward arrow to the chattering correction direction display unit to increase the rotation amplitude when the chattering value provided from the acceleration sensor is greater than the predetermined minimum chattering value, and output a signal for displaying a downward arrow to the chattering correction direction display unit to reduce the rotation amplitude variable period when the standard deviation of the chattering amplitude is greater than the predetermined reference amplitude.

In a preferred embodiment, the monitor may further include a chattering warning unit that outputs a warning message when the chattering value reaches a predetermined risk level value.

In a preferred embodiment, the acceleration sensor may be installed on a tool post of the machine tool.

In a preferred embodiment, the monitor may further include a noise filter that removes noise by filtering the chattering signal of the machine tool provided from the acceleration sensor.

In a preferred embodiment, the parameter input unit of the monitor may include a maximum amplitude maintaining time input unit that inputs a time of maintaining a maximum amplitude and a minimum amplitude of the rotation amplitude of the spindle.

In a preferred embodiment, the control unit may be configured to transmit the maximum amplitude maintaining time provided from the maximum amplitude maintaining time input unit to a numerical control device, which controls a change of the rotation amplitude and the rotation amplitude variable period of the spindle to be maintained as long as the maintaining time being input within a range of the maximum amplitude and a minimum amplitude of the rotation amplitude of the spindle.

In a preferred embodiment, the monitor may include a parameter display unit on one side thereof that graphically displays the increase or the decrease ratio of the rotation amplitude of the spindle, an increase or a decrease time of the rotation amplitude variable period, and the maximum amplitude maintaining time.

In addition, to resolve the problems discussed above, a method of controlling of a chattering of a machine tool according to another exemplary embodiment of the present disclosure may include: a chattering monitoring step (S 10) that detects a chattering value of the machine tool from an acceleration sensor and displays the detected chattering value in a graph form on a monitoring output unit of a monitor; a chattering coefficient calculation step (S20) that records the chattering value of the machine tool provided from the acceleration sensor within a predetermined time period, and calculates a standard deviation of a chattering amplitude change within a predetermined time period based on the chattering value of the machine tool provided from the acceleration sensor and records the same as a standard deviation of a chattering amplitude; a chattering correction determination step (S30) that determines a chattering correction is necessary when the chattering value received from the acceleration sensor and then recorded is greater than a predetermined minimum chattering value or the calculated standard deviation of the chattering amplitude is greater than a predetermined standard deviation of a reference amplitude; a chattering correction direction display step (S31) that outputs a signal for displaying an upward arrow to a chattering correction direction display unit to increase the rotation amplitude when the chattering value provided from the acceleration sensor and then recorded is greater than the predetermined minimum chattering value as a result of the chattering correction determination step (S30), and outputs a signal for displaying a downward arrow to the chattering correction direction display unit to reduce the rotation amplitude variable period when the calculated standard deviation of the chattering amplitude is greater than the predetermined standard deviation of the reference amplitude; a chattering correction coefficient input step (S32) that inputs a rotation amplitude ratio and an amplitude variable period value of the spindle to be corrected through a parameter input unit based on a direction of the arrow indicating the correction of the rotation amplitude and the amplitude variable period in the chattering correction direction display unit according to the chattering correction direction display step (S31); and a spindle rotational speed change step (S50) that provides the corrected rotation amplitude ratio and the amplitude variable period value of the spindle in the chattering correction coefficient input step (S32) to a numerical control device to change the rotation amplitude and the amplitude variable period of the spindle.

In a preferred embodiment, the chattering monitoring step (S 10) may further include outputting a warning message when the detected chattering value reaches a predetermined risk level value.

In a preferred embodiment, the chattering correction coefficient input step (S32) may additionally input a maximum amplitude maintaining time and control, via the numerical device, to maintain a spindle rotation amplitude as long as the maximum amplitude-maintaining time being input within a range of a maximum amplitude and a minimum amplitude of the rotation amplitude when changing the rotation amplitude and the rotation amplitude variable period of the spindle.

To resolve the problems discussed above, a method of controlling of a chattering of a machine tool according to still another exemplary embodiment of the present disclosure may include: a chattering monitoring step (S 10) that detects a chattering value of the machine tool from an acceleration sensor and displays the detected chattering value in a graph form on a monitoring output unit of a monitor; a chattering coefficient calculation step (S20) that records the chattering value of the machine tool provided from the acceleration sensor within a predetermined time period, and calculates a standard deviation of a chattering amplitude change within a predetermined time period based on the chattering value of the machine tool provided from the acceleration sensor and records the same as a standard deviation of a chattering amplitude; a chattering correction determination step (S30) that determines a chattering correction is necessary when the chattering value received from the acceleration sensor and then recorded is greater than a predetermined minimum chattering value or the calculated standard deviation of the chattering amplitude is greater than a predetermined standard deviation of a reference amplitude; a chattering correction step (S40) that outputs a command signal to a numerical control device for increasing a spindle rotation amplitude when the chattering value provided from the acceleration sensor and then recorded is greater than the predetermined minimum chattering value as a result of the chattering correction determination step (S30), and outputs a command signal to the numerical control device for decreasing a spindle rotation amplitude variable period when the calculated standard deviation of the chattering amplitude is greater than the predetermined standard deviation of the reference amplitude; and a spindle rotational speed change step (S50) that changes the rotation amplitude ratio and the amplitude variable period value of the spindle, via the numerical control device, based on the rotation amplitude and the amplitude variable period value of the spindle ordered in the chattering correction step (S40).

In a preferred embodiment, the chattering monitoring step (S 10) may further include outputting a warning message when the detected chattering value reaches a predetermined risk level value.

### [Advantageous Effects]

The present disclosure detects a chattering occurred in a machine tool, and automatically adjusts a rotation amplitude and an amplitude variable period of a spindle based on results of analyzing the detected chattering value to stabilize the chattering of the machine tool, which improves a machining roughness, reduces a vibration and a noise caused by the chattering, and further prevents abnormal wear and damage to the machine tool.

In addition, the present disclosure displays a direction of adjusting the rotation amplitude and the amplitude variable period of the spindle, which enables an operator to quickly and intuitively stabilize the chattering of the machine tool manually.

### [Description of Drawings]

FIG. 1 is a diagram illustrating a chattering level during machining of an outer diameter of a workpiece in the related art.
FIG. 2 is a diagram illustrating a chattering level through an adjusting process of a rotation amplitude and an amplitude variable period after machining of the outer diameter of the workpiece is initiated in the related art.
FIG. 3 is an exemplary diagram illustrating a chattering control device according to an exemplary embodiment of the present disclosure.
FIG. 4 is a flow chart illustrating a chattering control method that is manually performed according to an exemplary embodiment of the present disclosure.
FIG. 5 is a flow chart illustrating a chattering control method that is automatically executed according to an exemplary embodiment of the present disclosure.
FIG. 6 is an exemplary diagram illustrating a direction of adjustment of a rotation amplitude and an amplitude variable period when a chattering value is greater than a certain level and a chattering amplitude change is greater than a certain magnitude according to an exemplary embodiment of the present disclosure.
FIG. 7 is an exemplary diagram illustrating a direction of adjustment to adjust only a rotation amplitude when a chattering value is greater than a certain level and a chattering amplitude change is stable according to an exemplary embodiment of the present disclosure.
FIG. 8 is an exemplary diagram illustrating a direction of adjustment to adjust only an amplitude variable period when a chattering value is smaller than a certain level and a chattering amplitude change is greater than a certain magnitude according to an exemplary embodiment of the present disclosure.
FIG. 9 is an exemplary diagram illustrating a state in which a chattering is stabilized after adjusting a rotation amplitude and an amplitude variable period, and there is no need to adjust the rotation amplitude and the amplitude variable period according to an exemplary embodiment of the present disclosure.

### [Best mode for embodiment of Invention]

The following description is merely exemplary in nature and is not intended to limit the present disclosure, application, or uses. It should be understood that throughout the drawings, corresponding reference numerals indicate like or corresponding units and features.
In an exemplary embodiment of the present disclosure, "a rotation amplitude (A)" refers to a difference between a maximum rotational speed and a minimum rotational speed at which a rotational speed of a spindle of a machine tool changes within a certain period of time. Further, "an amplitude variable period (V)" refers to a time during which a rotation amplitude (A) of a spindle is repeated.

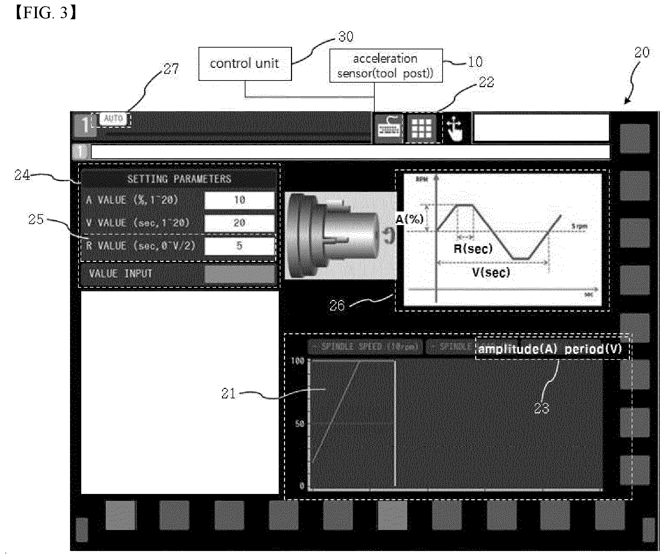

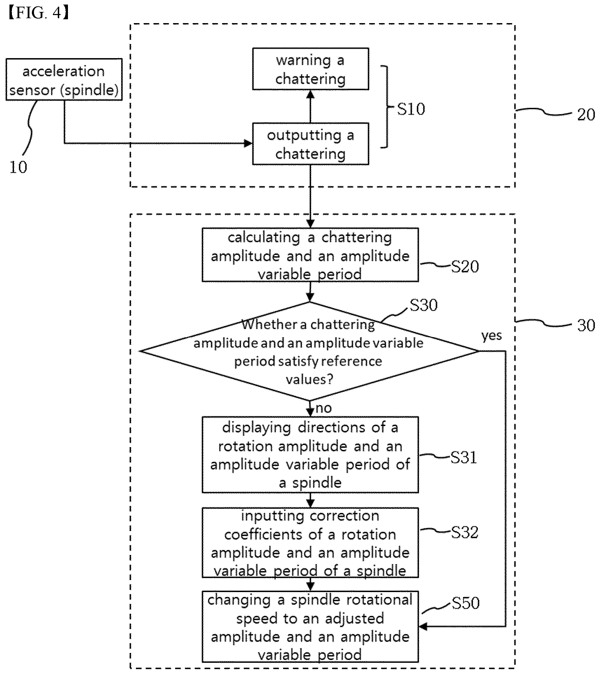

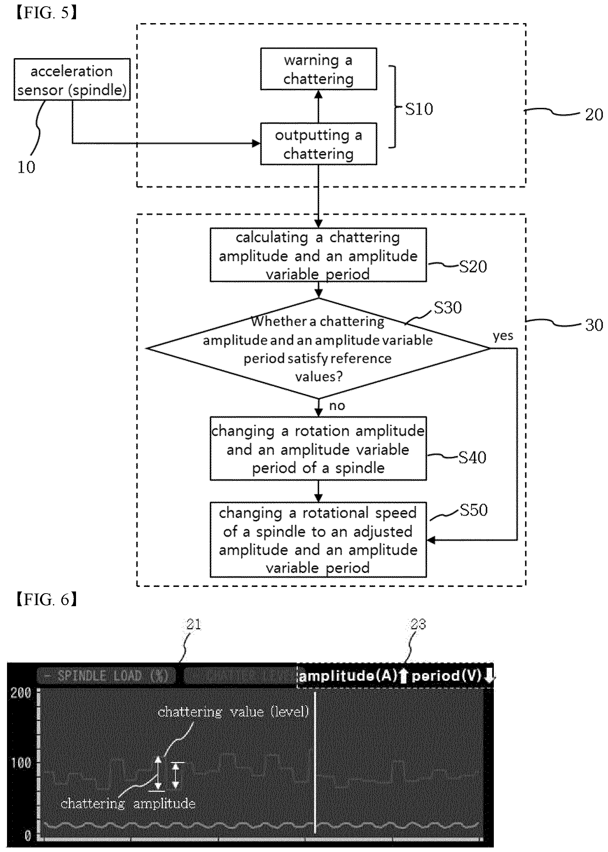

Hereinafter, exemplary preferred embodiments of the present disclosure are described in detail with reference to FIGS. 3 to 9. FIG. 3 is an exemplary diagram illustrating a chattering control device according to an exemplary embodiment of the present disclosure. FIG. 4 is a flow chart illustrating a chattering control method that is manually performed according to an exemplary embodiment of the present disclosure. FIG. 5 is a flow chart illustrating a chattering control method that is automatically executed according to an exemplary embodiment of the present disclosure.

As shown in FIG. 3, the chattering control device of the present disclosure may include an acceleration sensor 10 on a tool post (not shown) to detect a chattering signal of a machine tool, and the chattering signal of the machine tool detected from the acceleration sensor 10 may be provided to a monitor 20 and a control unit 30.

The monitor 20 may include a chattering output unit 21 that displays a chattering value provided from the acceleration sensor 10 in the form of a graph, a chattering warning unit 22 that outputs a warning message when the chattering value reaches a predetermined risk level value. The control unit 30 may be configured to adjust a rotation amplitude (A) and an amplitude variable period (V) of a spindle when the chattering value is greater than a predetermined minimum chattering value.

The acceleration sensor 10 may be installed at a position where vibration of the machine tool can be easily detected. The acceleration sensor 10 may be installed on a spindle or a machine tool frame rather than the tool post. The acceleration sensor 10 may be installed in two or more when needed. In addition, the monitor 20 may further include a noise filter (not shown) that removes noise by filtering a chattering signal of the machine tool provided from the acceleration sensor 10, and the chattering output unit 21 may display the chattering value based on the chattering signal passed through the noise filter.

As shown in FIGS. 3 to 5, a chattering correction direction display unit 23 may be disposed on one side of the monitor 20 to output an increase and a decrease indication of the rotation amplitude (A) and the amplitude variable period (V) of the spindle provided by the control unit 30. Preferably, the chattering correction direction display unit 23 may be located on one upper side of the chattering output unit 21, and the displayed increase and decrease indication of the rotation amplitude (A) and the amplitude variable period (V) may be displayed as an upward arrow or a downward arrow, which improves an operator's visibility when compared with the chattering value displayed on the chattering output unit 21.

The control unit 30 may be configured to display the upward arrow on the chattering correction direction display unit 23 in a case that the rotation amplitude (A) and the amplitude variable period (V) of the spindle should be increased, and display the downward arrow on the chattering correction direction display unit 23 in a case that the rotation amplitude (A) and the amplitude variable period (V) of the spindle should be decreased.

In addition, the control unit 30 may be configured not to display the upward or the downward arrow on the chattering correction direction display unit 23 in a case that there is no need to display an increase or a decrease of the rotation amplitude (A) and the amplitude variable period (V) of the spindle, i.e., when the chattering has been stabilized.

A chattering correction direction display unit 23 may be disposed on the other side of the monitor 20 to input an increase or a decrease ratio of the rotation amplitude (A) and a time corresponding to the rotation amplitude variable period (V) of the spindle. Accordingly, the operator may input an arbitrary increase or decrease value in the parameter input unit 24 according to an indication direction of the arrow requiring the increase or the decrease of the rotation amplitude (A) and the amplitude variable period (V) of the spindle which are displayed in the chattering correction direction display unit 23.

Meanwhile, in another exemplary embodiment, the parameter input unit 24 may further include a maximum amplitude maintaining time input unit 25 that inputs a time of maintaining a maximum amplitude and a minimum amplitude of the rotation amplitude (A) of the spindle.

The monitor 20 may further include a parameter display unit 26 on the other side thereof that displays, in a graphic image, an increase or a decrease ratio value of the rotation amplitude (A) of the spindle, an increase or a decrease time of the rotation amplitude variable period (V), and a maximum amplitude maintaining time (R). In addition, on the other side of the monitor 20, a mode selection unit 27 may be arranged to enable the operator to select the chattering correction work in a manual mode or an automatic mode.

The control unit 30 may set a chattering value at which the chattering of the machine tool is regarded as stable for a predetermined time as a minimum chattering value, and may set a chattering amplitude at which the chattering may be regarded as stable for a predetermined time period as a reference chattering amplitude.

Here, the reference amplitude may be set as a standard deviation of the chattering amplitude at which the chattering may be considered stable over a predetermined time period, or may be set as an average value of the chattering amplitude at which the chattering may be considered stable over a predetermined time.

The minimum chattering value, the reference amplitude or the standard deviation of the reference chattering amplitude are values that are predetermined as threshold values corresponding to a stability of the chattering through a prior test machining.

In the exemplary embodiments hereinbelow, the reference amplitude may be used with the same meaning as the average value of the chattering amplitude or the standard deviation of the reference chattering amplitude unless specifically limited.

The control unit 30 may be configured to record the chattering value of the machine tool provided from the acceleration sensor 10, and calculate the standard deviation of a chattering amplitude change within a predetermined time period and record the same as a standard deviation of the chattering amplitude.

As discussed in another exemplary embodiment of the present disclosure in the above, when the standard deviation of the chattering amplitude at which the chattering may be considered stable is set as the average value of the chattering amplitude, and the standard deviation of the chattering amplitude to be calculated is recorded as an average value of the chattering amplitude change within the predetermined time period.

The control unit 30 may be configured to compare the recorded chattering value with a predetermined minimum chattering value, simultaneously compare the calculated standard deviation of the chattering amplitude with a predetermined standard deviation of the reference amplitude, and then determine whether a chattering correction is necessary.

In other words, when the chattering value provided from the acceleration sensor is greater than the predetermined minimum chattering value, or when the calculated standard deviation of the chattering amplitude is greater than the predetermined standard deviation of the reference amplitude (when the chattering amplitude is large), the control unit 30 may be configured to determine that a chattering correction is necessary.

In accordance with the result of the determination, the control unit 30 may be configured to output a signal for displaying an upward arrow to the chattering correction direction display unit 23 to increase the rotation amplitude (A) when the chattering value provided from the acceleration sensor 10 is greater than the predetermined minimum chattering value, and the control unit 30 may be configured to output a signal for displaying a downward arrow to the chattering correction direction display unit 23 to reduce the rotation amplitude variable period (V) when the calculated standard deviation of the chattering amplitude is greater than the predetermined standard deviation of the reference amplitude (when the chattering amplitude is large).

In other words, as shown in FIG. 6, when the chattering value provided from the acceleration sensor 10 is greater than the predetermined minimum chattering value (that is 50 in this embodiment) and when the calculated standard deviation of the chattering amplitude is greater than the predetermined standard deviation of the reference amplitude, the control unit 30 may be configured to output the signal for displaying the upward arrow to increase the rotation amplitude (A), and output the signal for displaying the downward arrow to reduce the rotation amplitude variable period (V) to the chattering correction direction display unit 23.

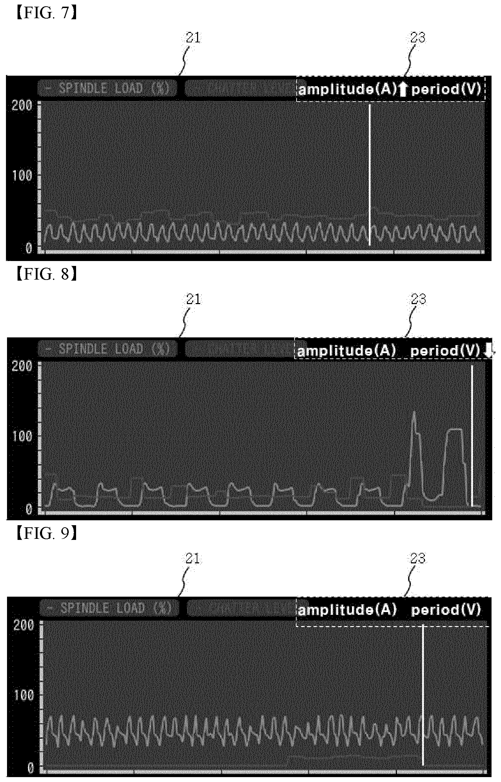

Meanwhile, as shown in FIG. 7, when the chattering value provided from the acceleration sensor 10 is greater than the predetermined minimum chattering value (that is 50 in this embodiment) and the calculated standard deviation of the chattering amplitude is smaller than the predetermined standard deviation of the reference amplitude, the control unit 30 may be configured to output a signal for displaying the upward arrow to increase the rotation amplitude (A), but not to output a signal for displaying an arrow to adjust the rotation amplitude variable period (V) to the chattering correction direction display unit 23.

As shown in FIG. 8, when the chattering value provided from the acceleration sensor 10 is smaller than the predetermined minimum chattering value (that is 50 in this embodiment) and the calculated standard deviation of the chattering amplitude is greater than the predetermined standard deviation of the reference amplitude, the control unit 30 may be configured not to output a signal for displaying an arrow to adjust the rotation amplitude (A), but to output a signal for displaying a downward arrow to reduce the rotation amplitude variable period (V) to the chattering correction direction display unit 23.

As shown in FIG. 9, when the chattering value provided from the acceleration sensor 10 is smaller than the predetermined minimum chattering value (that is 50 in this embodiment) and the calculated standard deviation of the chattering amplitude is smaller than the predetermined standard deviation of the reference amplitude, the control unit 30 may be configured not to output signals for displaying both arrows to adjust the rotation amplitude (A) and the rotation amplitude variable period (V) to the chattering correction direction display unit 23. That is, in a case that a chattering is stabilized, the rotation amplitude (A) and the rotation amplitude variable period (V) do not need to be corrected, so the control unit 30 may be configured not to output a signal for displaying a correction direction.

Therefore, before machining the workpiece, since the machine tool has been set to a reference rotation amplitude (A) and a reference amplitude variable period (V) in a state where the chattering has been stabilized as default values, as the machining precedes, a correction of the rotation amplitude (A) displayed in the chattering correction direction display unit 23 may be outputted in an upward arrow and a correction of the rotation amplitude variable period (V) may be outputted in a downward arrow based on a chattering level and a chattering amplitude.

In addition, When the operator inputs a ratio of the rotation amplitude (A) and a value of the amplitude variable period (V) to be corrected through the parameter input unit 24 according to the direction of the arrow indicating the correction direction of the rotation amplitude (A) and the amplitude variable period (V) displayed in the chattering correction direction display unit 23, the control unit 30 may be configured to provide the input values to a numerical control device (not shown) to change the rotation amplitude (A) and the amplitude variable period (V) .

Here, the control unit 30 may be configured to input the maximum amplitude maintaining time (R) through the parameter input unit 24. When the maximum amplitude maintaining time (R) is entered, the control unit 30 may provide the same to a numerical control device (not shown) and control a change of the rotation amplitude (A) and the rotation amplitude variable period (V) of the spindle to be maintained as long as the maximum maintaining time (R) being input within a range of the maximum amplitude and a minimum amplitude of the rotation amplitude (A), enabling the change of the rotation amplitude (A) to be performed smoothly.

In other words, the control unit 30 may be configured to control the change of the rotation amplitude (A) to be formed theoretically in a sine wave corresponding to a square wave from a triangle wave, and control the change of the spindle rotational speed more smoothly, thereby minimizing the chattering more stably. However, such the input of the maximum amplitude maintaining time (R) may be omitted as the chattering stabilization effect may be obtained to some extent just by correcting the rotation amplitude (A) and the amplitude variable period (V).

As described in the above, in the manual mode, the operator may correct the rotation amplitude (A) and the amplitude variable period (V) of the spindle based on the chattering value provided in real time from the acceleration sensor 10, while noticing the correction direction arrow of the rotation amplitude (A) and amplitude variable period (V) through the monitor 20, and may stabilize the chattering of the machine tool easily and quickly.

Meanwhile, in another exemplary embodiment of the present disclosure, when the mode selection unit 27 installed on one side of the monitor 20 is selected as an automatic mode, as shown in FIG. 5, the control unit 30 may be configured to compare the chattering value provided in a real time from the acceleration sensor 10 and the standard deviation of the chattering amplitude calculated from the chattering value with the predetermined minimum chattering value and the standard deviation of the reference chattering amplitude, respectively, and determine whether a chattering correction is necessary. As a result of the determination, when the chattering value provided in real time from the acceleration sensor 10 is greater than the predetermined minimum chattering value, the control unit 30 may be configured to automatically control to increase the rotation amplitude (A) and reduce the amplitude variable period (V) when the calculated standard deviation of the chattering amplitude is greater than the predetermined standard deviation of the reference chattering amplitude.

Therefore, in the automatic mode, the rotation amplitude (A) and the amplitude variable period (V) are automatically varied within the predetermined reference amplitude and the reference amplitude variable period (V) range according to the chattering value of the machine tool, thereby enabling the chattering of the machine tool to be stabilized.

Hereinafter, an exemplary embodiment of a method of controlling the chattering control apparatus according to exemplary embodiments of the present disclosure configured as the above will be described.

### <An exemplary embodiment of correcting a chattering in a manual mode>

As shown in FIG. 4, when the operator selects a manual mode in the mode selection unit 27, a chattering monitoring step (S10) may be firstly executed.

In this step, the control unit 30 may be configured to detect the chattering signal of the machine tool from the acceleration sensor 10, and display the detected chattering value in a graphic form on the chattering output unit 21 of the monitor 20. Meanwhile, this chattering monitoring step (S 10) may further include outputting a warning message when the detected chattering value reaches a predetermined risk level value.

Next, a chattering coefficient calculation step (S20) may be executed.

In this step, the control unit 30 may be configured to record the chattering value of the machine tool provided from the acceleration sensor within a predetermined time period, and calculate a standard deviation of a chattering amplitude change value within a predetermined time period based on the chattering value of the machine tool provided from the acceleration sensor 10 and record the same as a standard deviation of a chattering amplitude.

Next, a chattering correction determination step (S30) may be executed.

In this step, the control unit 30 may be configured to compare the recorded the chattering value with a predetermined minimum chattering value, simultaneously compare the calculated standard deviation of the chattering amplitude with a predetermined standard deviation of the reference amplitude, and then determine that a chattering correction is necessary when the chattering value provided from the acceleration sensor is greater than the predetermined minimum chattering value, or the calculated standard deviation of the chattering amplitude is greater than the predetermined standard deviation of the reference amplitude.

However, when the chattering value provided from the acceleration sensor is smaller than the predetermined minimum chattering value and the calculated standard deviation of the chattering amplitude is smaller than the predetermined standard deviation of the reference amplitude, the control unit 30 may be configured to determine that a chattering correction is not necessary.

Next, a chattering correction direction display step (S31) may be executed.

In this step, the control unit 30 may be configured to output a signal for displaying an upward arrow to a chattering correction direction display unit 23 to increase the rotation amplitudewhen the chattering value provided from the acceleration sensor 10 is greater than the predetermined minimum chattering value as a result of the chattering correction determination step (S30). In addition, the control unit 30 may be configured to output a signal for displaying a downward arrow to the chattering correction direction display unit 23 to reduce the rotation amplitude variable period when the calculated standard deviation of the chattering amplitude is greater than the predetermined standard deviation of the reference amplitude.

Meantime, when the chattering value provided from the acceleration sensor 10 is smaller than the predetermined minimum chattering value, or when the calculated standard deviation of the chattering amplitude is smaller than the predetermined standard deviation of the reference amplitude, the control unit 30 may be configured not to output signals for displaying both arrows to adjust the rotation amplitude (A) and the rotation amplitude variable period (V) to the chattering correction direction display unit 23. That is, in a case that a chattering is stabilized, since the rotation amplitude (A) and the rotation amplitude variable period (V) do not need to be corrected, the control unit 30 may be configured not to output a signal for displaying a correction direction.

Next, a chattering correction coefficient input step (S32) may be executed.

In this step, the operator may input a rotation amplitude (A) ratio and an amplitude variable period (V) value of the spindle to be corrected through a parameter input unit 24 based on a direction of the arrow indicating the correction of the rotation amplitude and the amplitude variable period in the chattering correction direction display unit 23 according to the chattering correction direction display step (S31).

A spindle rotational speed change step (S50) may be then followed.

In this step, the control unit 30 may be configured to provide the rotation amplitude (A) ratio and the amplitude variable period (V) value of the spindle that have been input in the chattering correction coefficient input step (S32) to a numerical control device (not shown) to change the rotation amplitude (A) and the amplitude variable period (V) of the spindle.

In the chattering correction coefficient input step (S32), the operator may additionally input a time of maintaining a maximum amplitude and a minimum amplitude of the rotation amplitude (A). When the maximum amplitude maintaining time (R) is input through a maximum amplitude maintaining time input unit 25 of the parameter input art 24, the control unit 30 may, through the numerical control device, control the rotation amplitude (A) of the spindle to be maintained as long as the maximum maintaining time (R) being input within a range of the maximum amplitude and a minimum amplitude of the rotation amplitude (A) of the spindle when changing the rotation amplitude (A) and the rotation amplitude variable period (V) of the spindle.

As such, the control unit 30 may control the rotational speed of the spindle to be maintained as long as the maximum maintaining time (R) being input within the range of the maximum amplitude and the minimum amplitude of the rotation amplitude (A) of the spindle, so the rotation amplitude (A) may be changed to a smooth sine wave not a triangle wave and therefore the chattering may be controlled to be minimized more stably. However, such the input of the maximum amplitude maintaining time (R) may be omitted as the rotation amplitude (A) of the spindle may be changed into the sine wave to some extent just by correcting the rotation amplitude (A) and the amplitude variable period (V) due to acceleration and deceleration characteristics of the spindle motor.

Meanwhile, as shown in FIG. 6 to FIG. 9, in the chattering correction direction display step (S31), arrows of the correction direction of the rotation amplitude (A) and the reference amplitude variable period (V) are displayed in the chattering correction direction display (23) as below.

As shown in FIG. 6, when the chattering value provided from the acceleration sensor 10 is greater than the predetermined minimum chattering value (that is 50 in this embodiment) and when the calculated standard deviation of the chattering amplitude is greater than the predetermined standard deviation of the reference amplitude, the control unit 30 may be configured to output a signal for displaying an upward arrow to increase the rotation amplitude (A), and output a signal for displaying a downward arrow to reduce the rotation amplitude variable period (V) to the chattering correction direction display unit 23.

Further, as shown in FIG. 7, when the chattering value provided from the acceleration sensor 10 is greater than the predetermined minimum chattering value (that is 50 in this embodiment) and the calculated standard deviation of the chattering amplitude is smaller than the predetermined standard deviation of the reference amplitude, the control unit 30 may be configured to output a signal for displaying the upward arrow to increase the rotation amplitude (A), but not to output a signal for displaying an arrow to adjust the rotation amplitude variable period (V) to the chattering correction direction display unit 23.

In addition, as shown in FIG. 8, when the chattering value provided from the acceleration sensor 10 is smaller than the predetermined minimum chattering value (that is 50 in this embodiment) and the calculated standard deviation of the chattering amplitude is greater than the predetermined standard deviation of the reference amplitude, the control unit 30 may be configured not to output a signal for displaying an arrow to adjust the rotation amplitude (A), but to output a signal for displaying a downward arrow to reduce the rotation amplitude variable period (V) to the chattering correction direction display unit 23.

As shown in FIG. 9, when the chattering value provided from the acceleration sensor 10 is smaller than the predetermined minimum chattering value (that is 50 in this embodiment) and the calculated standard deviation of the chattering amplitude is smaller than the predetermined standard deviation of the reference amplitude, the control unit 30 may be configured not to output signals for displaying both arrows to adjust the rotation amplitude (A) and the rotation amplitude variable period (V) to the chattering correction direction display unit 23. That is, in a case that a chattering is stabilized, the rotation amplitude (A) and the rotation amplitude variable period (V) do not need to be corrected, so the control unit 30 may be configured not to output a signal for displaying a correction direction.

### <An exemplary embodiment of correcting a chattering in an automatic mode>

As shown in FIG. 5, when the operator selects an automatic mode in the mode selection unit 27 installed on the monitor 20, the control unit 30 may be configured to record a chattering value provided from the acceleration sensor 10 in a predetermined time period, calculate a standard deviation of a change value of the chattering amplitude and record the same as a standard deviation of the chattering amplitude.

Then, the control unit 30 may be configured to compare the recorded chattering value with a predetermined minimum chattering value, simultaneously compare the calculated standard deviation of the chattering amplitude with a predetermined standard deviation of the reference amplitude, and determine whether a chattering correction is necessary.

As a result of the determination, when the recorded chattering value being provided in real time from the acceleration sensor 10 is greater than the predetermined minimum chattering value, the control unit 30 may be configured to determine that a chattering correction is necessary and increase the rotation amplitude (A). Meanwhile, when the calculated standard deviation of the chattering amplitude is greater than the predetermined standard deviation of the reference amplitude, the control unit 30 may be configured to determine that a chattering correction is necessary and reduce the amplitude variable period (V).

Accordingly, in the automatic mode, the rotation amplitude (A) and the amplitude variable period (V) are automatically varied within the predetermined reference amplitude and the reference amplitude variable period (V) range according to the chattering value of the machine tool, thereby stabilizing the chattering of the machine tool.

Hereinafter, a control method of the control unit 30 will be described in more detail through exemplary embodiments of the present disclosure.

As shown in FIG. 5, when the operator selects an automatic mode in the mode selection unit 27, a chattering monitoring step (S10) may be firstly executed.

In this step, the control unit 30 may be configured to detect the chattering signal of the machine tool from the acceleration sensor 10, and display the detected chattering value in a graphic form on the chattering output unit 21 of the monitor 20.

In addition, this chattering monitoring step (S 10) may further include outputting a warning message when the detected chattering value reaches a predetermined risk level value.

Next, a chattering coefficient calculation step (S20) may be executed.

In this step, the control unit 30 may be configured to record the chattering value of the machine tool provided from the acceleration sensor within a predetermined time period, and calculate a standard deviation of a chattering amplitude change value within a predetermined time period based on the chattering value of the machine tool provided from the acceleration sensor 10 and record the same as a standard deviation of a chattering amplitude.

Next, a chattering correction determination step (S30) may be executed.

In this step, the control unit 30 may be configured to compare the recorded the chattering value with a predetermined minimum chattering value, simultaneously compare the calculated standard deviation of the chattering amplitude with a predetermined standard deviation of the reference amplitude, and then determine whether a chattering correction is necessary.

Her, in the chattering correction determination step (S30), when the chattering value received from the acceleration sensor 10 and then recorded is greater than a predetermined minimum chattering value or the calculated standard deviation of the chattering amplitude is greater than a predetermined standard deviation of the reference amplitude, the control unit 30 may be configured to determine that the rotation amplitude (A) and the amplitude variable period (V) needs to be changed for correcting the chattering. However, when the chattering value provided from the acceleration sensor 10 is smaller than the predetermined minimum chattering value and the calculated standard deviation of the chattering amplitude is smaller than the predetermined standard deviation of the reference amplitude, the control unit 30 may be configured to determine that a chattering correction is not necessary.

Next, a chattering correction step (S40) may be executed.

When it is determined that the chattering correction is necessary in the chattering correction determination step (S30), the control unit 30 may be configured to output a command signal to a numerical control device for increasing a spindle rotation amplitude (A) when the chattering value provided from the acceleration sensor 10 and then recorded is greater than the predetermined minimum chattering value, but output a command signal to the numerical control device for decreasing a spindle rotation amplitude variable period (V) when the calculated standard deviation of the chattering amplitude is greater than the predetermined standard deviation of the reference amplitude.

Next, a spindle rotational speed change step (S50) may be executed.

In this step, the control unit 30 may be configured to change a rotation amplitude (A) and an amplitude variable period (V) of the spindle, through the numerical control device, based on the rotation amplitude (A) and the amplitude variable period (V) of the spindle ordered in the chattering correction step (S40).

As described above, when the operator selects the automatic mode in the mode selection unit 27, the chattering monitoring step (S10) to the spindle rotational speed change step (S50) have been repeatedly executed in real time, the chattering of the machine tool may be converged and stabilized within the preset minimum chattering value and the range of the preset reference amplitude variable period (V).

As described in the exemplary embodiments of the present disclosure in the above, when a chattering is generated in a machine tool, the chattering is detected and a rotation amplitude (A) and a amplitude variable period (V) of a spindle are automatically adjusted based on results of analyzing the detected chattering value to stabilize the chattering of the machine tool, which improves a machining roughness, reduces a vibration and a noise caused by the chattering, and further prevents abnormal wear and damage to the machine tool.

In addition, the present disclosure displays a direction of adjusting the rotation amplitude (A) and the amplitude variable period (V) of the spindle, which enables an operator to quickly and intuitively stabilize the chattering of the machine tool manually.

### [Explanation of Signs]

10: acceleration sensor
20: monitor
21: chattering output unit
22: chattering warning unit
23: chattering correction direction display unit
24: parameter input unit
25: maximum amplitude maintaining time input unit
26: parameter display unit
27: mode selection unit
30: control unit
S 10: chattering monitoring step
S20: chattering coefficient calculation step
S30: chattering correction determination step
S31: chattering correction direction display step
S32: chattering correction coefficient input step
S40: chattering correction step
S50: spindle rotational speed change step

## Claims

1. An apparatus of controlling a chattering of a machine tool, comprising:
an acceleration sensor installed at a forced frequency part of the machine tool to detect a chattering signal of the machine tool;
a monitor including a chattering output unit for displaying a chattering value provided from the acceleration sensor in a graph form, a chattering correction direction display unit for outputting an increase or a decrease of a rotation amplitude and a rotation amplitude variable period of a spindle, and a parameter input unit for inputting an increase or a decrease ratio of the rotation amplitude of the spindle and a time corresponding to the rotation amplitude variable period; and
a control unit for changing the rotation amplitude and the rotation amplitude variable period of the spindle by providing a rotation amplitude ratio and an amplitude variable period value of the spindle, which are input through the parameter input unit, to a numerical control device when a chattering value is greater than a predetermined minimum chattering value or a chattering amplitude is greater than a predetermined reference amplitude.

2. The apparatus of claim 1, wherein the control unit is configured to set a minimum chattering value to a chattering value that determines a chattering of the machine tool to be stable for a predetermined time and set a predetermined reference amplitude to a standard deviation of the chattering amplitude that determines the chattering to be stable for a predetermined time period, and
wherein when the chattering value of the machine tool provided from the acceleration sensor is greater than the minimum chattering value, or the standard deviation of the chattering amplitude of the machine tool provided from the acceleration sensor within a predetermined time period is greater than the predetermined reference amplitude, the control unit is configured to determine that a chattering correction is necessary.

3. The apparatus of claim 2, wherein the control unit is configured to output a signal for displaying an upward arrow to the chattering correction direction display unit to increase the rotation amplitude when the chattering value provided from the acceleration sensor is greater than the predetermined minimum chattering value, and output a signal for displaying a downward arrow to the chattering correction direction display unit to reduce the rotation amplitude variable period when the standard deviation of the chattering amplitude is greater than the predetermined reference amplitude.

4. The apparatus of claim 1, wherein the monitor further includes a chattering warning unit that outputs a warning message when the chattering value reaches a predetermined risk level value.

5. The apparatus of claim 1, wherein the acceleration sensor is installed on a tool post of the machine tool.

6. The apparatus of claim 1, wherein the monitor further includes a noise filter that removes noise by filtering the chattering signal of the machine tool provided from the acceleration sensor.

7. The apparatus of claim 1, wherein the parameter input unit of the monitor includes a maximum amplitude maintaining time input unit that inputs a time of maintaining a maximum amplitude and a minimum amplitude of the rotation amplitude of the spindle.

8. The apparatus of claim 7, wherein the control unit is configured to transmit the maximum amplitude maintaining time provided from the maximum amplitude maintaining time input unit to a numerical control device, which controls a change of the rotation amplitude and the rotation amplitude variable period of the spindle to be maintained as long as the maintaining time being input within a range of the maximum amplitude and a minimum amplitude of the rotation amplitude of the spindle.

9. The apparatus of claim 1, wherein the monitor includes a parameter display unit on one side thereof that graphically displays the increase or the decrease ratio of the rotation amplitude of the spindle, an increase or a decrease time of the rotation amplitude variable period, and the maximum amplitude maintaining time.

10. A method of controlling of a chattering of a machine tool, comprising:
a chattering monitoring step (S10) that detects a chattering value of the machine tool from an acceleration sensor and displays the detected chattering value in a graph form on a monitoring output unit of a monitor;
a chattering coefficient calculation step (S20) that records the chattering value of the machine tool provided from the acceleration sensor within a predetermined time period, and calculates a standard deviation of a chattering amplitude change within a predetermined time period based on the chattering value of the machine tool provided from the acceleration sensor and records the same as a standard deviation of a chattering amplitude;
a chattering correction determination step (S30) that determines a chattering correction is necessary when the chattering value received from the acceleration sensor and then recorded is greater than a predetermined minimum chattering value or the calculated standard deviation of the chattering amplitude is greater than a predetermined standard deviation of the reference amplitude;
a chattering correction direction display step (S31) that outputs a signal for displaying an upward arrow to a chattering correction direction display unit to increase the rotation amplitude when the chattering value provided from the acceleration sensor and then recorded is greater than the predetermined minimum chattering value as a result of the chattering correction determination step (S30), and outputs a signal for displaying a downward arrow to the chattering correction direction display unit to reduce the rotation amplitude variable period when the calculated standard deviation of the chattering amplitude is greater than the predetermined standard deviation of the reference amplitude;
a chattering correction coefficient input step (S32) that inputs a rotation amplitude ratio and an amplitude variable period value of the spindle to be corrected through a parameter input unit based on a direction of the arrow indicating the correction of the rotation amplitude and the amplitude variable period in the chattering correction direction display unit according to the chattering correction direction display step (S31); and
a spindle rotational speed change step (S50) that provides the corrected rotation amplitude ratio and the amplitude variable period value of the spindle in the chattering correction coefficient input step (S32) to a numerical control device to change the rotation amplitude and the amplitude variable period of the spindle.

11. The method of claim 10, wherein the chattering monitoring step (S10) further includes outputting a warning message when the detected chattering value reaches a predetermined risk level value.

12. The method of claim 10, wherein the chattering correction coefficient input step (S32) may additionally input a maximum amplitude maintaining time and control, via the numerical device, to maintain a spindle rotation amplitude as long as the maximum amplitude-maintaining time being input within a range of a maximum amplitude and a minimum amplitude of the rotation amplitude when changing the rotation amplitude and the rotation amplitude variable period of the spindle.

13. A method of controlling of a chattering of a machine tool, comprising:
a chattering monitoring step (S10) that detects a chattering value of the machine tool from an acceleration sensor and displays the detected chattering value in a graph form on a monitoring output unit of a monitor;
a chattering coefficient calculation step (S20) that records the chattering value of the machine tool provided from the acceleration sensor within a predetermined time period, and calculates a standard deviation of a chattering amplitude change within a predetermined time period based on the chattering value of the machine tool provided from the acceleration sensor and records the same as a standard deviation of a chattering amplitude;
a chattering correction determination step (S30) that determines a chattering correction is necessary when the chattering value received from the acceleration sensor and then recorded is greater than a predetermined minimum chattering value or the calculated standard deviation of the chattering amplitude is greater than a predetermined standard deviation of the reference amplitude;
a chattering correction step (S40) that outputs a command signal to a numerical control device for increasing a spindle rotation amplitude when the chattering value provided from the acceleration sensor and then recorded is greater than the predetermined minimum chattering value as a result of the chattering correction determination step (S30), and outputs a command signal to the numerical control device for decreasing a spindle rotation amplitude variable period when the calculated standard deviation of the chattering amplitude is greater than the predetermined standard deviation of the reference amplitude; and
a spindle rotational speed change step (S50) that changes the rotation amplitude ratio and the amplitude variable period value of the spindle, via the numerical control device, based on the rotation amplitude and the amplitude variable period value of the spindle ordered in the chattering correction step (S40).

14. The method of claim 13, wherein the chattering monitoring step (S10) further includes outputting a warning message when the detected chattering value reaches a predetermined risk level value.
